## Europäisches Patentamt

## European Patent Office

## Office européen des brevets

(19)

(11) Veröffentlichungsnummer: **0 114 296**

**B1**

(12) # EUROPÄISCHE PATENTSCHRIFT

(45) Veröffentlichungstag der Patentschrift:
**08.04.87**

(51) Int. Cl.⁴: **B 01 D 33/10**

(21) Anmeldenummer: **83112516.6**

(22) Anmeldetag: **13.12.83**

(54) **Vorrichtung zum Abscheiden von Feststoffen aus einer Flüssigkeit, insbesondere Abwässern.**

(30) Priorität: **27.12.82 DE 3248230**

(43) Veröffentlichungstag der Anmeldung:
**01.08.84 Patentblatt 84/31**

(45) Bekanntmachung des Hinweises auf die Patenterteilung:
**08.04.87 Patentblatt 87/15**

(84) Benannte Vertragsstaaten:
**AT BE CH DE FR GB IT LI LU NL SE**

(56) Entgegenhaltungen:
**DE-C-40 269**
**DE-C-76 200**
**DE-C-160 807**
**DE-C-303 756**
**FR-A-402 127**
**FR-A-2 310 970**
**FR-A-2 515 059**
**GB-A-703 367**
**GB-A-1 447 755**
**GB-A-1 525 871**
**US-A-1 512 028**
**US-A-2 705 562**

(73) Patentinhaber: **Hein, Lehmann Aktiengesellschaft, Fichtenstrasse 75, D-4000 Düsseldorf 1 (DE)**

(72) Erfinder: **Neikes, Manfred, Kölner Strasse 395, D-4330 Mülheim 13 (DE)**

(74) Vertreter: **Patentanwaltsbüro Cohausz & Florack, Schumannstrasse 97, D-4000 Düsseldorf 1 (DE)**

## Beschreibung

Die Erfindung betrifft eine Vorrichtung zum Abscheiden von Feststoffen aus einer Flüssigkeit, insbesondere aus Wasser, durch in einem teilzylindrischen Behälter angeordnete achsparallele Ausräumer, die von einer sich drehenden, eine mittige Antriebswelle aufweisenden Tragvorrichtung gehalten sind und sich entlang der Behälterinnenwandung bewegen, wobei oberhalb des Flüssigkeitsspiegels die Behälterwandung endet und dort eine waagerechte Kante bildet, an der die Feststoffe von den Ausräumern nach außen abgegeben werden.

Es sind teilzylindrische Entwässerungsmulden mit einem Spaltsieb als Wandung bekannt. Bei diesen Vorrichtungen ist eine Trennung von Sink- und Schwimmstoffen nicht möglich. Vielmehr werden solche Vorrichtungen zusätzlich zu anderen verwendet, so daß eine Reihe verschiedener Vorrichtungen erforderlich ist, um Abwässer zu behandeln.

Aus der DE-A 27 22 063 ist es bekannt, durch eine einzige Vorrichtung Sink- und Schwimmstoffe aus Abwasser zu entfernen. Diese bekannte Vorrichtung ist in der Konstruktion aufwendig, da sie zum Austragen dieser Feststoffe durch Ketten geführte Mitnehmer benötigt. Darüber hinaus ermöglicht diese Vorrichtung keine Trennung der Sink- und Schwimmstoffe nach ihrem Austrag.

Auch sind zahlreiche Vorrichtungen zum Entfernen von Sinkstoffen aus Abwässern bekannt, DE-C 406 196, FR-A 22 65 689 und FR-A 23 10 970.

Aufgabe der Erfindung ist es, eine Vorrichtung der eingangs genannten Art derart zu verbessern, daß durch sie nicht nur Sink- und Schwimmstoffe abgeschieden werden können, sondern bei einfachster Bauweise ein getrenntes Austragen und Abtransportieren dieser Stoffe ermöglicht wird. Darüber hinaus ist es Aufgabe der Erfindung, Wirtschaftlichkeit, Störanfälligkeit, Energiebedarf, Montageaufwand und Platzbedarf zu verbessern.

Diese Aufgaben werden erfindungsgemäß dadurch gelöst, daß der Behälter durch eine quer zu der Behälterachse angeordnete Trennwand in zwei Kammern unterteilt ist, in denen jeweils Ausräumer laufen, die an getrennten Tragvorrichtungen befestigt sind, und daß die erste Kammer, in die die Flüssigkeit zuerst gelangt, eine Wandung ohne Austrittsöffnungen für die Flüssigkeit aufweist und die Wandung der nachfolgenden zweiten Kammer von einem Sieb, insbesondere Spaltsieb gebildet ist.

Durch diese Vorrichtung gelingt es, Sink- und Schwimmstoffe bei hohem Wirkungsgrad gleichzeitig abzuscheiden und dabei diese unterschiedlichen Feststoffe getrennt auszutragen und z.B. in verschiedene Container zu bringen. Die Feststoffe werden nicht aufgewirbelt, und die Vorrichtung ist auch bei haftenden Feststoffen, wie z.B. Lehm und Ton, einsetzbar, da auch diese aus der Flüssigkeit, insbesondere einem Abwasser, und aus der Vorrichtung sicher entfernt werden.

Es wird eine gute Vorklärung erreicht, und es können Kanalnetz- und Kläranlagen entlastet werden. Der Energiebedarf ist gering, und die Aufstellung ist problemlos, da der Montageaufwand klein ist und nur wenig Platz für die Vorrichtung benötigt wird. Die Vorrichtung stellt eine Kleinkläranlage dar mit hoher Wirtschaftlichkeit und geringer Störanfälligkeit.

Die Tragvorrichtungen für die Ausräumer können von radialen Armen gebildet sein, die an einer waagerechten mittigen Antriebswelle befestigt sind und an ihren Enden die Ausräumer tragen. Dabei ist es besonders vorteilhaft, wenn beide Tragvorrichtungen auf derselben mittigen Antriebswelle befestigt und damit gemeinsam angetrieben sind. Ferner wird vorgeschlagen, daß über die obere waagerechte Kante der Trennwand die Flüssigkeit von der ersten zur zweiten Kammer fließt. Hierdurch bestimmt die quer angeordnete Trennwand die Höhe des Flüssigkeitsspiegels in der ersten Kammer. Dabei kann die Kante ein Leitblech für Schwimmstoffe aufweisen, so daß diese sich nicht stauen, sondern sicher in die zweite Kammer geführt werden.

Besonders vorteilhaft ist es, wenn die Ausräumer mit einer sehr niedrigen Geschwindigkeit, insbesondere mit einer Umfangsgeschwindigkeit von 0,5 bis 2 m/min, entlang der Behälterinnenwandung gleiten. Hierdurch wird verhindert, daß die Sinkstoffe aufgewirbelt werden. Vielmehr wird ein hoher Ausräumgrad dieser Feststoffe erreicht.

Eine optimale Entwässerung der Feststoffe wird dadurch erzielt, daß die Ausräumer ein Spaltsieb insbesondere an ihrer Innenseite aufweisen.

Vorzugsweise wird vorgeschlagen, daß die Ausräumer an der Tragvorrichtung angelenkt und durch federnde Mittel gegen die Behälterinnenwandung gedrückt werden, und daß oberhalb der Behälterwand die Ausräumer durch die federnden Mittel nach außen schwenkbar sind. Hierdurch wird ein sicherer Austrag der Feststoffe, insbesondere auch bei haftenden, erreicht. Dabei ist von Vorteil, wenn nach dem Nachaußenschwenken der Ausräumer diese in den Bereich einer Abstreifvorrichtung gelangen, durch die Feststoffe von den Ausräumern entfernbar sind. Auch kann die Abstreifvorrichtung drehbar gelagert sein und durch Eigengewicht oder Federdruck die Ausräumer abreinigen.

Ferner wird vorgeschlagen, daß die Ausräumer nach der Feststoffabgabe in den Bereich von mindestens einem Führungsteil, insbesondere Führungsblech oder -schiene gelangen, durch das die Ausräumer nach innen schwenkbar sind.

Für den Austrag beider Kammern kann ein gemeinsames Fördermittel, insbesondere eine Schnecke, angeordnet werden. Besonders vorteilhaft ist es, wenn zwei getrennte Fördermittel vorgesehen sind, da dann die durch die Vorrichtung erhaltene Trennung der verschiedenen Feststoffe beibehalten bleibt.

Der Wasserauslauf dieser Vorrichtung liegt nur wenig tiefer als der Wassereinlauf. Dies wird dadurch möglich, da die Vorrichtung nur ein geringes Gefälle benötigt. Damit werden durch diese Vorrichtung keine zusätzlichen Pumpen erforderlich. Zu diesem geringen Gefälle trägt u.a. bei, daß der Flüssigkeitsauslauf der zweiten Kammer nur wenig niedriger liegt als deren Flüssigkeitsspiegel. Auch wird hierzu vorgeschlagen, daß der Flüssigkeitsspiegel der zweiten Kammer nur wenig niedriger liegt als der Flüssigkeitsspiegel der ersten.

Ein Ausführungsbeispiel der Erfindung ist in den Zeichnungen dargestellt und wird im folgenden näher beschrieben. Es zeigen:

Fig. 1 einen senkrechten Querschnitt durch die Vorrichtung;,

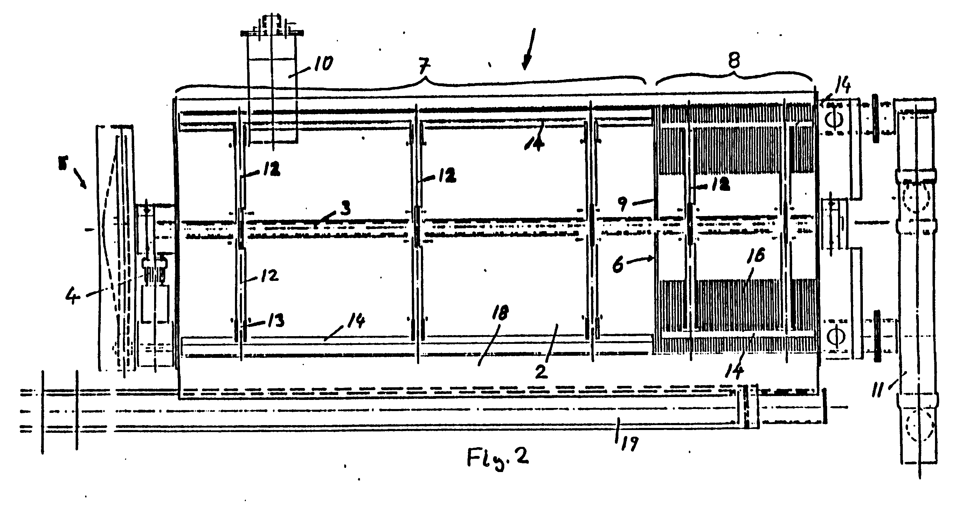

Fig. 2 eine Draufsicht auf die Vorrichtung; und

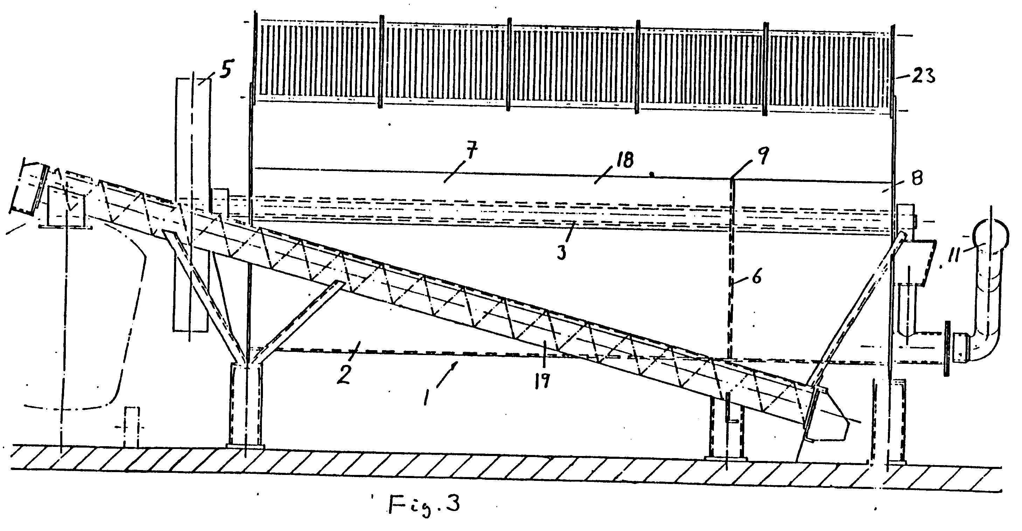

Fig. 3 eine Seitenansicht der Vorrichtung.

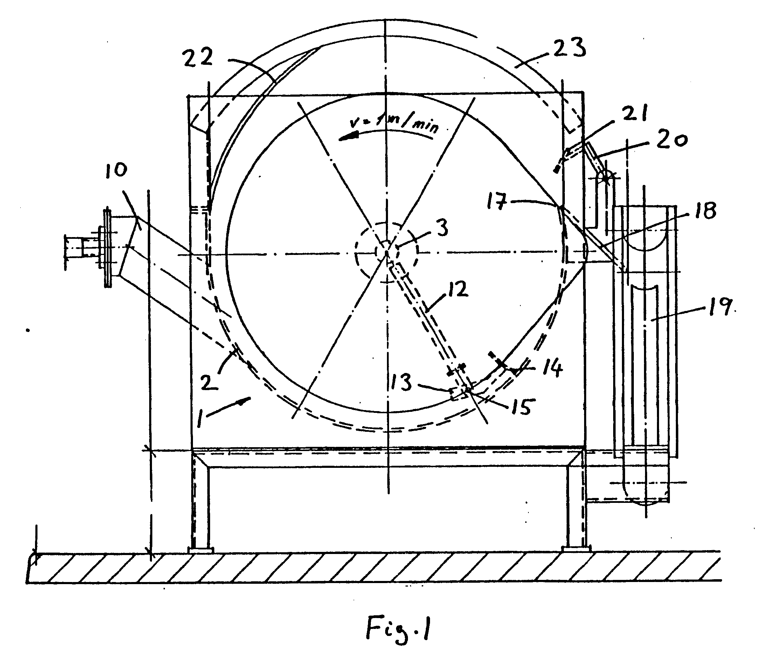

Ein wannenartiger Behälter 1 in Form eines liegenden, nach oben hin offenen Abschnittes eines hohlen Kreiszylinders weist eine Behälterwandung 2 auf und ist an den Stirnseiten geschlossen. Im Behälter liegt eine Antriebswelle 3 koaxial zur Zylinderachse und wird durch einen Elektromotor 4 über ein Getriebe 5 angetrieben. Die Drehrichtung ist in Fig.1 entgegen dem Uhrzeigersinn.

Der Behälterinnenraum ist durch eine quer zur Welle 3 angeordnete Trennwand 6 in zwei Kammern unterteilt, von denen die erste Kammer 7 in axialer Richtung eine größere Länge aufweist als die der zweiten Kammer 8. Die Trennwand 6 wird von der Welle 3 durchdrungen, und die obere waagerechte Kante 9 der Trennwand 6 bildet die Überlaufkante der zu behandelnden Flüssigkeit, insbesondere des Abwassers, und weist ein nicht dargestelltes Leitblech auf. Die Kante 9 bestimmt die Höhe des Flüssigkeitsspiegels in der Kammer 7, wobei die Flüssigkeit durch einen Einlauf 10 in die Kammer 7 gelangt. Der Ablauf 11 der Vorrichtung ist zwar in Bodenhöhe angeordnet, aber außerhalb der Vorrichtung so weit hochgezogen, daß der Flüssigkeitsspiegel in der zweiten Kammer 8 nur wenig tiefer liegt als der in der ersten Kammer 7.

An der Antriebswelle 3 sind Arme 12 radial befestigt, an deren freien Enden Halteteile 13 angelenkt sind, die waagerechte Leisten als Ausräumer 14 tragen. Da die Tragteile 13 im Bereich der Anlenkstelle 15 zur Erzeugung eines Drehmomentes federnd belastet sind, insbesondere durch nicht dargestellte Gummielemente, werden die Ausräumer 14 gegen die Behälterinnenwandung gedrückt.

Für die beiden Kammern 7 und 8 sind getrennte Ausräumer 14 vorgesehen, wobei sich die Ausräumer jeweils etwa über die Länge jeder Kammer erstrecken. In der zweiten Kammer 8 können die Ausräumer auch ohne Anlenkstelle unbeweglich angeordnet sein, wobei sie von Kunststoffschiebern oder Bürsten gebildet sein können. Während in der ersten Kammer 7 die Behälterwandung keine Öffnungen aufweist, ist bei der zweiten Kammer 8 die Behälterwandung nur im unteren Bereich geschlossen, während die daran angrenzenden Seitenteile der Wandung von Spaltsieben 16 gebildet wird. Die zweite Kammer 8 kann auch durchgehend mit Spaltsieben versehen werden. Durch diese Spaltsiebe 16 fließt die in der Kammer 8 enthaltene Flüssigkeit hindurch, um den Auslauf 11 zu erreichen.

Bei beiden Behälterkammern 7 und 8 endet im Ausräumbereich die Behälterwandung etwas oberhalb der Welle 3 in einer waagerechten Kante 17, an der sich nach außen hin ein Leitblech 18 anschließt, das nach unten geneigt ist und zu einer Förderschnecke 19 führt, die etwa über die gesamte Länge der Vorrichtung sich erstreckt und ansteigend oberhalb eines Behälters oder eines Wagens endet. In manchen Fällen ist es zweckmäßig, die Förderschnecke 19 in einer Horizontalen anzuordnen.

Sobald die Ausräumer 14 die Kante 17 erreichen, werden die Ausräumer durch die federnden Elemente nach außen geschwenkt, um die aufgenommenen Feststoffe abzugeben. Nach Weiterdrehung gegen den Uhrzeigersinn erreichen die leistenförmigen Ausräumer 14 eine leistenförmige Abstreifvorrichtung 20, die durch Eigengewicht oder Federmittel zum Behälterinneren hin beaufschlagt ist und mit ihrer Leiste 21 die noch am Ausräumer 14 anhaftenden Feststoffe abkratzt. Hierbei wird die Abstreifvorrichtung 20 durch den Ausräumer 14 aufgrund dessen Bewegung nach außen geschwenkt.

Während der Weiterbewegung der Ausräumer 14 durch die Welle 3 und die Arme 12 erreichen diese oberhalb des Behälters 1 ein Führungsblech 22, das die Ausräumer 14 aus einer abstehenden Lage in eine einwärts geschwenkte Lage bewegt, so daß die Ausräumer wieder die Innenwandung des Behälters erreichen. Statt Führungsbleche 22 können auch Führungsschienen vorgesehen sein.

Die Ausräumer weisen auf ihrer Innenseite jeweils ein Spaltsieb auf, so daß auf den Ausräumern befindliche Feststoffe entwässert werden. Die Ausräumer 14 laufen mit einer sehr geringen Geschwindigkeit von 0,5 bis 2 m/min, insbesondere mit 1 m/min, um, so daß sich im Behälter abgesetzte Feststoffe nicht aufgewirbelt werden. Oberhalb des Behälters 1 ist eine gitterförmige Abdeckung 23 insbesondere aus Sicherheitsgründen angebracht.

Durch die dargestellte Förderschnecke 19 können beide Kammern 7 und 8 entsorgt werden. Besonders vorteilhaft ist es aber, für beide Kammern getrennte Fördermittel vorzusehen, da hierdurch die in der Kammer 7 sich ablagernden Sinkstoffe getrennt von den in der Kammer 8 gewonnen Schwimmstoffen entfernt werden können. Dies kann bei vielen Reinigungs-, Klär- und Herstellungsverfahren genutzt werden.

## Patentansprüche

1. Vorrichtung zum Abscheiden von Feststoffen aus einer Flüssigkeit, insbesondere aus Wasser, durch in einem teilzylindrischen Behälter (1) angeordnete achsparallele Ausräumer (14), die von einer sich drehenden, eine mittige Antriebswelle (3) aufweisenden Tragvorrichtung (12, 13) gehalten sind und sich entlang der Behälterinnenwandung bewegen, wobei oberhalb des Flüssigkeitsspiegels die Behälterwandung (2) endet und dort eine waagerechte Kante (17) bildet, an der die Feststoffe von den Ausräumern nach außen abgegeben werden, dadurch gekennzeichnet, daß der Behälter (1) durch eine quer zu der Behälterachse angeordnete Trennwand (6) in zwei Kammern (7, 8) unterteilt ist, in denen jeweils Ausräumer (14) laufen, die an getrennten Tragvorrichtungen (12, 13) befestigt sind, und daß die erste Kammer (7), in die die Flüssigkeit zuerst gelangt, eine Wandung (2) ohne Austrittsöffnungen für die Flüssigkeit aufweist und die Wandung der nachfolgenden zweiten Kammer (8) von einem Sieb (16), insbesondere Spaltsieb, gebildet ist.

2. Vorrichtung nach Anspruch 1, dadurch gekennzeichnet, daß die beiden Tragvorrichtungen (12, 13) auf derselben mittigen Antriebswelle (3) befestigt sind.

3. Vorrichtung nach Anspruch 1 oder 2, dadurch gekennzeichnet, daß über die obere waagerechte Kante (9) der Trennwand (6) die Flüssigkeit von der ersten (7) zur zweiten Kammer (8) fließt.

4. Vorrichtung nach Anspruch 3, dadurch gekennzeichnet, daß die Kante (9) ein Leitblech für Schwimmstoffe aufweist.

5. Vorrichtung nach einem der Ansprüche 1 bis 4, dadurch gekennzeichnet, daß die Ausräumer (14) mit einer sehr niedrigen Geschwindigkeit, insbesondere mit einer Umfangsgeschwindigkeit von 0,5 bis 2 m/min entlang der Behälterinnenwandung gleiten.

6. Vorrichtung nach einem der Ansprüche 1 bis 5, dadurch gekennzeichnet, daß die Ausräumer (14) ein Spaltsieb insbesondere an ihrer Innenseite aufweisen.

7. Vorrichtung nach einem der Ansprüche 1 bis 6, dadurch gekennzeichnet, daß die Ausräumer (14) an der Tragvorrichtung (12) angelenkt und durch federnde Mittel gegen die Behälterinnenwandung gedrückt werden, und daß oberhalb der Behälterwand die Ausräumer (14) durch die federnden Mittel nach außen schwenkbar sind.

8. Vorrichtung nach Anspruch 7, dadurch gekennzeichnet, daß nach dem Nachaußenschwenken der Ausräumer (14) diese in den Bereich einer Abstreifvorrichtung (20) gelangen, durch die Feststoffe von den Ausräumern entfernbar sind.

9. Vorrichtung nach Anspruch 8, dadurch gekennzeichnet, daß die Abstreifvorrichtung (20) drehbar gelagert ist und durch Eigengewicht oder Federdruck die Ausräumer (14) abreinigt.

10. Vorrichtung nach einem der Ansprüche 7 bis 9, dadurch gekennzeichnet, daß die Ausräumer (14) nach der Feststoffabgabe in den Bereich von mindestens einem Führungsteil, insbesondere Führungsblech (22) oder -schiene gelangen, durch das die Ausräumer nach innen schwenkbar sind.

11. Vorrichtung nach einem der Ansprüche 1 bis 10, dadurch gekennzeichnet, daß für beide Kammern (7, 8) im Auswurfbereich der Feststoffe eine gemeinsame oder zwei getrennte Fördermittel (19) vorgesehen sind.

12. Vorrichtung nach einem der Ansprüche 1 bis 11, dadurch gekennzeichnet, daß der Flüssigkeitsauslauf (11) der zweiten Kammer (8) nur wenig niedriger liegt als deren Flüssigkeitsspiegel.

13. Vorrichtung nach einem der Ansprüche 1 bis 12, dadurch gekennzeichnet, daß der Flüssigkeitsspiegel der zweiten Kammer nur wenig niedriger liegt als der Flüssigkeitsspiegel der ersten.

## Claims

1. Apparatus for separating solids from a liquid particularly water, by means of axially parallel rake-out means (14) which are disposed in a partly cylindrical container (1) and which are held by a rotating carrier device (12, 13) having a central drive shaft (3) and move along the innerwall of the container, the container wall (2) ending above the level of the liquid and there forming a horizontal edge (17) at which the solids are discharged to the outside by the rake-out means, characterized in that the container (1) in divided by a partition (6) disposed transversely of the axis of the container into two chambers (7, 8) in each of which rake-out means (14) fastened to separate carrier devices (12, 13) act, and that the first chamber (7), into which the liquid first passes, has a wall (2) having no outlet apertures for the liquid, while the wall of the following, second chamber (8) is formed by a sieve (16), particularly a bar sieve.

2. Apparatus according to Claim 1, characterized in that the txo carrier devices (12, 13) are fastened on the same central drive shaft (3).

3. Apparatus according to Claim 1 or 2, characterized in that above the top horizontal edge (9) of the partition (6) the liquid flows from the first chamber (7) to the second chamber (8).

4. Apparatus according to Claim 3, characterized in that the edge (9) has a guide plate for floating substances.

5. Apparatus according to one of Claims 1 to 4, characterized in that the rake-out means (14) slide at a very slow speed, particularly at a peripheral speed of 0.5 to 2 metres per minute, along the inner wall of the container.

6. Apparatus according to one of Claims 1 to 5, characterized in that the rake-out means (14) have a bar sieve, particularly on their inner side.

7. Apparatus according to one of Claims 1 to 6, characterized in that the rake-out means (14) are pivotally mounted on the carrier device (12) and are pressed by resilient means against the inner wall of the container, and that above the container wall the rake-out means (14) are adapted to be swung outwards by the resilient means.

8. Apparatus according to Claim 7, characterized in that after the rake-out means (14) have been swung out, they come within the range of a stripper device (20) by which the solids can be removed from the rake-out means.

9. Apparatus according to Claim 8, characterized in that the stripper device (20) is rotatably mounted and cleans the rake-out means (14) through its own weight or spring pressure.

10. Apparatus according to one of Claims 7 to 9, characterized in that after giving up the solids the rake-out means (14) come within the range of at least one guide member, particularly a guider plate (22) or guide rail, by which the rake-out means can be swung inwards.

11. Apparatus according to one of Claims 1 to 10, characterized in that for the two chambers one common or two separate conveyors (19) is or are provided for the two chambers in the solids ejection region.

12. Apparatus according to one of Claims 1 to 11, characterized in that the liquid outlet (11) of the second chamber (8) lies only slightly lower than the level of liquid in said chamber.

13. Apparatus according to one of Claims 1 to 12, characterized in that the level of liquid in the second chamber is only slightly lower than the level of liquid in the first chamber.


**Revendications**

1. - Dispositif pour séparer des matières solides d'un liquide, en parti culier d'eau, au moyen de curettes (14) disposées à axes parallèles dans un récipient (1) partiellement cylindrique, qui sont maintenues par un dispositif porteur pivotant (12, 13) présentant un arbre moteur central (3) et qui se déplacent le long de la paroi intérieure du récipient, la paroi (2) du récipient se terminant au-dessus du niveau du liquide et formant à cet endroit une arête horizontale (17) à laquelle les matières solides sont conduites par les curettes vers l'extérieur, caractérisé par le fait que le récipient (1) est divisé en deux chambres (7, 8) par une paroi de séparation (6) disposée transversalement par rapport à l'axe du récipient, dans lesquelles se déplacent respectivement des curettes (14) qui sont fixées à des dispositifs porteurs (12, 13) séparés, et que la première chambre (7), dans laquelle parvient d'abord le liquide, présente une paroi (2) sans ouvertures de sortie pour le liquide et la paroi de la seconde chambre (8) qui la suit est forme par un tamis (16), en particulier un tamis à fentes.

2.- Dispositif selon la revendication 1, caractérisé par le fait que les deux dispositifs porteurs (12, 13) sont fixés sur le même arbre moteur central (3).

3.- Dispositif selon l'une des revendications 1 et 2, caractérisé par le fait que le liquide coule de la première chambre (7) à la seconde (8) au-dessus de l'arête horizontale supérieure (9) de la paroi de séparation (6).

4.- Dispositif selon la revendication 3, caractérisé par le fait que l'arête (9) présente un déflecteur pour les matières surnageantes.

5.- Dispositif selon l'une des revendications 1 à 4, caractérisé par le fait que les curettes (14) glissent le long de la paroi intérieure du recipient à une très faible vitesse, en particulier à une vitesse périphérique de 0,5 à 2 m/mn.

6.- Dispositif selon l'une des revendications 1 à 5, caractérisé par le fait que les curettes (14) présentent un tamis à fentes en particulier sur leur face intérieure.

7.- Dispositif selon l'une des revendications 1 à 6, caractérisé par le fait que les curettes (14) sont articulées sur le dispositif porteur (12) et sont poussées par des moyens élastiques contre la paroi intérieure du récipient, et que, au-dessus de la paroi du récipient, les curettes (14) peuvent pivoter vers l'extérieur sous l'action de moyens élastiques.

8.- Dispositif selon la revendication 7, caractérisé par le fait que, après le pivotemant des curettes (14) vers l'extérieur, celles-ci atteignet la zone d'un dispositif racleur (20) que peut séparer les matières solides des curettes.

9.- Dispositif selon la revendication 8, caractérisé par le fait que le dispositif racleur (20) est monté pivotant et nettoie les curettes (14) par son poids propre ou par pression de ressort.

10.- Dispositif selon l'une des revendications 7 à 9, caractérisé par le fait que les curettes (14) atteignent, après le dégagement des matières solides, la zone d'au moins une pièce de guidage, en particulier tôle de guidage (22) ou rail de guidage, au moyen desquelles les curettes peuvent pivoter vers l'intérieur.

11.- Dispositif selon l'une des revendications 1 à 10, caractérisé par le fait que, pour les deux chambres (7, 8), un moyen de transport commun ou deux moyens de transport séparés (19) sont prévus dans la zone d'éjéction des matières solides.

12.- Dispositif selon l'une des revendications 1 à 11, caractérisé par le fait que la sortie (11) de la seconde chambre (8) n'est que légèrement plus bas que son niveau de liquide.

13.- Dispositif selon l'une des revendications 1 à 12, caractérisé par le fait que le niveau de liquide de la seconde chambre n'est que légèrement plus bas que le niveau de liquide de la première chambre.

Fig. 1

Fig. 2

Fig.3